# EUROPÄISCHE PATENTSCHRIFT

(11) **EP 2 024 224 B1**
(45) Veröffentlichungstag und Bekanntmachung des Hinweises auf die Patenterteilung: **28.10.2009**
(21) Anmeldenummer: 07725417.5
(22) Anmeldetag: 22.05.2007
(51) Int. Cl.: B62J 17/04

(54) **VORRICHTUNG ZUR BEFESTIGUNG EINES WINDSCHILDS AN EINEM FAHRZEUGTEIL**
DEVICE FOR ATTACHING A WINDSHIELD TO A VEHICLE PART
DISPOSITIF POUR LA FIXATION D'UN BRISE-VENT SUR UNE PIÈCE DE VÉHICULE

(30) Priorität: 08.06.2006 DE 102006026628
(43) Veröffentlichungstag der Anmeldung: 18.02.2009
(73) Patentinhaber: Bayerische Motoren Werke Aktiengesellschaft, 80809 München (DE)
(72) Erfinder: BEUTING, Guido, 81247 München (DE)
(86) Internationale Anmeldenummer: PCT/EP2007/004511
(87) Internationale Veröffentlichungsnummer: WO 2007/140873

(56) Entgegenhaltungen:
- EP-A- 1 418 119
- EP-A- 1 642 811
- EP-A1- 1 369 345
- DE-A1-102004 032 241
- US-A1- 2005 161 970
- US-A1- 2006 087 143
- US-B1- 6 196 614

## Beschreibung

Die Erfindung betrifft eine Vorrichtung zur Befestigung eines Windschilds an einem Fahrzeugteil, insbesondere an der Gabelbrücke und am lnstrumententräger eines Motorrades, umfassend einen mit dem Windschild dauerhaft verbundenen Halter, der mit der Gabelbrücke und mit dem Instrumententräger verbindbar ist, (siehe zum Beispiel das Dokument EP-A-1369345).

Wenn die Verbindung des Halters mit der Gabelbrücke und mit dem Instrumententräger lösbar ausgebildet ist, dann kann die aus dem Halter und dem damit dauerhaft verbundenen Windschild bestehende Einheit gegen eine andere Einheit ausgetauscht werden, bei der das Windschild andere Abmessungen aufweist. Der Besitzer des Motorrades hat daher die Möglichkeit, dieses entsprechend der jeweiligen Witterung wahlweise mit einem größeren oder einem kleineren Windschild auszurüsten.

Bei den bekannten Vorrichtungen zur Befestigung eines Windschilds ist die Montage und auch die Demontage verhältnismäßig kompliziert und zeitraubend. Der Austausch eines Windschilds gegen ein anderes mit abweichenden Abmessungen ist daher in kurzer Zeit nicht möglich.

Der Erfindung liegt die Aufgabe zugrunde, eine gattungsgemäße Vorrichtung zu schaffen, die es ermöglicht, ein montiertes Windschild rasch zu demontieren und gegebenenfalls gegen ein solches mit anderen Abmessungen auszutauschen.

Erfindungsgemäß wird diese Aufgabe dadurch gelöst, dass der Halter im unteren vorderen Bereich ein Querrohr aufweist, dass ein nach hinten offenes klauenartiges Aufnahmeteil an dem Instrumententräger dauerhaft befestigbar ist, in welches das Querrohr einsetzbar ist, und dass der hintere Bereich des Halters mit der Gabelbrücke lösbar verbindbar ist.

Zur Demontage des erfindungsgemäßen Windschilds ist es lediglich erforderlich, die Verbindung des Halters mit der Gabelbrücke zu lösen, woraufhin der Halter aus dem klauenartigen Aufnahmeteil nach hinten herausgezogen werden kann. Zum Einbau eines Windschilds mit anderen Abmessungen wird das Querrohr seines Halters von hinten in das klauenartige Aufnahmeteil eingesetzt, und der hintere Bereich des Halters wird sodann mit der Gabelbrücke lösbar verbunden. Diese Vorgänge lassen sich rasch und einfach durchführen.

Um mögliche Klappergeräusche zu vermeiden, ist gemäß einer Weiterbildung der erfindungsgemäßen Vorrichtung vorgesehen, dass die Gabelbrücke Gewindebohrungen aufweist, und dass der Halter im hinteren Bereich mit Öffnungen versehen ist, die zu den Gewindebohrungen geringfügig versetzt sind, so dass der Halter im eingebauten Zustand unter Vorspannung steht. Zur Aufrechterhaltung dieser Vorspannung ist das Querrohr des Halters und/oder das klauenartige Aufnahmeteil vorzugsweise mit einem elastischen Material beschichtet, das im Einbauzustand komprimiert ist.

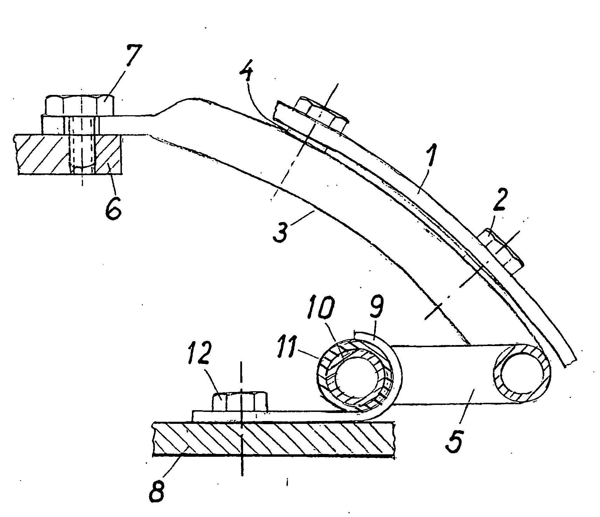

Die Erfindung wird nachfolgend anhand eines in der Zeichnung dargestellten bevorzugten Ausführungsbeispiels näher erläutert.

Die einzige Figur der Zeichnung zeigt eine schematische Seitenansicht eines Windschilds für ein Motorrad im Einbauzustand.

Ein Windschild 1 aus einem transparenten Material ist mit Schrauben 2 mit einem Halter dauerhaft verbunden. Zwischen dem Windschild 1 und dem Halter sind Scheiben 4 aus einem vorzugsweise elastischen Material angeordnet. Der Halter besteht aus einem offenen Rohrbogen 3, mit dessen Querteil ein U-förmiger Bügel 5 verschweißt ist. die beiden freien Enden des Rohrbogens 3 sind mit Öffnungen zur Aufnahme von Befestigungsschrauben 7 versehen. In einer Gabelbrücke 6 eines (nicht gezeigten) Motorrades sind Gewindebohrungen angeordnet, in welche die Befestigungsschrauben 7 eingeschraubt werden können. An einem Instrumententräger 8 des Motorrades ist ein nach hinten offenes klauenartiges Aufnahmeteil 9 dauerhaft befestigt, beispielsweise mit selbstsichernden Schrauben 12. Das Querrohr 10 des Bügels 5 ist mit einer Umhüllung 11 aus einem elastischen Material versehen.

Zur Montage des mit dem Halter verbundenen Windschilds 1 wird das Querrohr 10 des Bügels 5 von hinten her in das klauenartige Aufnahmeteil 9 eingesetzt. Der Abstand der in der Gabelbrücke 6 angeordneten Gewinder bohrungen von dem klauenartigen Aufnahmeteil 9 ist so gewählt, dass die in den offenen Enden des Rohrbogens 5 angeordneten Öffnungen zu den Gewindebohrungen geringfügig nach hinten versetzt sind. Zum Einschrauben der Befestigungsschrauben 7 muß der Halter demzufolge unter Kompression der elastischen Umhüllung 11 so weit nach vorne verschoben werden, dass die Öffnungen mit den Gewindebohrungen fluchten. Nachdem die Befestigungsschrauben 7 in die Gabelbrücke 6 eingeschraubt sind, steht der Halter wegen der Kompression der Umhüllung 11 unter Vorspannung, so dass Klappergeräusche verhindert werden.

Zur Demontage des Windschilds werden die beiden Befestigungsschrauben 7 entfernt, und der Halter wird soweit nach hinten verschoben, dass das Querrohr 10 von dem Aufnahmeteil 9 freikommt. Daraufhin kann der Halter zusammen mit dem daran befestigten Windschild 1 nach oben abgehoben werden.

Die aus Windschild 1 und Halter bestehende vormontierte Baueinheit kann in unterschiedlichen Ausführungsformen angeboten werden. Dabei ist der Abstand des Querrohrs 10 des Halters von den Befestigungsöffnungen an den freien Enden des Rohrbogens 3 jeweils identisch, die Abmessungen und/oder die Form des Windschilds 1 können jedoch verschieden sein. Der Besitzer eines Motorrades hat daher die Möglichkeit, das montierte Windschild im Bedarfsfall rasch und einfach gegen ein anderes auszutauschen.

### Bezugszeichenliste:

- 1: Windschild
- 2: Schrauben
- 3: Rohrbogen
- 4: Scheiben
- 5: Bügels
- 6: Gabelbrücke
- 7: Befestigungsschrauben
- 8: Instrumententräge
- 9: Aufnahmeteil
- 10: Querrohr
- 11: Umhüllung
- 12: Schrauben

## Patentansprüche

1. Vorrichtung zur Befestigung eines Windschilds (1) an einem Fahrzeugteil, insbesondere an der Gabelbrücke (6) und am Instrumententräger (8) eines Motorrades, umfassend einen mit dem Windschild (1) dauerhaft verbundenen Halter (3,5), der mit der Gabelbrücke (6) und mit dem Instrumententräger (8) verbindbar ist, **dadurch gekennzeichnet, dass** der Halter (3, 5) im unteren vorderen Bereich ein Querrohr (10) aufweist, dass ein nach hinten offenes klauenartiges Aufnahmeteil (9) an dem Instrumententräger (8) dauerhaft befestigbar ist, in welches das Querrohr (10) einsetzbar ist, und dass der hintere Bereich des Halters (3, 5) mit der Gabelbrücke (6) lösbar verbindbar ist.

2. Vorrichtung nach Anspruch 1, **dadurch gekennzeichnet, dass** die Gabelbrücke (6) Gewindebohrungen aufweist, und dass der Halter (3, 5) im hinteren Bereich mit Öffnungen versehen ist, die zu den Gewindebohrungen geringfügig versetzt sind, so dass der Halter im eingebauten Zustand unter Vorspannung steht.

3. Vorrichtung nach Anspruch 2, **dadurch gekennzeichnet, dass** das Querrohr (10) des Halters (3, 5) und/bder das klauenartiger Aufnahmeteil (9) mit einem elastischen Material (11) beschichtet ist.

## Claims

1. A device for fastening a windscreen (1) to a part of a vehicle, especially to the fork bridge (6) and to the instrument panel (8) on a motorcycle, the device comprising a holder (3, 5) permanently connected to the windscreen (1) and connectable to the fork bridge (6) and to the instrument panel (8), **characterised in that** the bottom region of the holder (3, 5) comprises a transverse tube (10), **in that** a claw-like receiving part (9) open at the rear is permanently fastened to the instrument holder (8) and the transverse tube (10) is insertable into it, and **in that** the rear region of the holder (3, 5) is releasably connectable to the fork bridge (6).

2. A device according to claim 1, **characterised in that** the fork bridge (6) has screwthreaded bores and the rear region of the holder (3, 5) is formed with openings which are slightly offset relative to the screwthreaded bores so that the holder is under prestress when installed.

3. A device according to claim 2, **characterised in that** the transverse tube (10) of the holder (3, 5) and/or the claw-like receiving part (9) is coated with an elastic material (11).

## Revendications

1. Dispositif pour la fixation d'un brise-vent (1) sur une pièce de véhicule, notamment sur le pont de fourche (6) et sur le support d'instrument (8) d'une moto, comprenant un support (3, 5) relié de manière permanente au brise-vent (1), ce support pouvant être relié au pont de fourche (6) et au support d'instrument (8),
**caractérisé en ce que**
dans sa zone avant inférieure, le support (3, 5) comporte un tube transversal (10),
une pièce de réception (9) en forme de griffe ouverte vers l'arrière, est fixée de manière permanente au support d'instrument (8), pièce recevant le tube transversal (10), et
la zone arrière du support (3, 5) est reliée de manière amovible au pont de fourche (6).

2. Dispositif selon la revendication 1,
**caractérisé en ce que**
le pont de fourche (6) comporte des taraudages, et
le support (3, 5) comporte des ouvertures dans la zone arrière, ces ouvertures étant légèrement décalées par rapport aux taraudages pour qu'à l'état monté, le support soit sous précontraint.

3. Dispositif selon la revendication 2,
**caractérisé en ce que**
le tube transversal (10) du support (3, 5) et/ou la pièce de réception (9) en forme de griffe sont revêtus d'une matière élastique (11).
